# EUROPEAN PATENT APPLICATION

(11) **EP 3 593 647 A2**
(43) Date of publication of application: **15.01.2020**
(21) Application number: 19184830.8
(22) Date of filing: 05.07.2019
(51) Int. Cl.: A23L 7/196, A23L 7/10

(54) **METHOD AND APPARATUS FOR THE PROCESSING OF CEREALS AND PRODUCT PREPARED WITH THIS METHOD AND APPARATUS**

(30) Priority: 10.07.2018 IT 201800007065
(71) Applicant: Sarcom Srls, 13100 Vercelli (IT)
(72) Inventor: VIAZZO, Carlo, 13100 Vercelli (IT)
(74) Representative: Rastelli, Franco

(57) **Abstract**

Method and apparatus for producing a parboiled cereal, especially rice, by means of an autoclave inside of which a series of conveyor belts conveys the cereal that is wet and then thermally treated with water vapor under pressure. The cereal does not require a previous treatment in soaking tanks. The method and the apparatus according to the invention make it possible to produce bulgur rice.

## Description

### BACKGROUND OF THE INVENTION

The present invention relates to a method and apparatus for the processing of cereals and a product prepared using this method and apparatus.

The subject of the present invention consists specifically of a method and an apparatus for the precooking, parboiled processing, of rice and other cereals.

As is known, taking into account the improved organoleptic characteristics and digestibility, presented by food products obtained with natural fermentation processes, such as beer, dairy products, cheeses, etc., in the past, also for rice, at least on an artisanal scale, processes that tended to enrich the chemical-physical qualities were used.

These processes, that essentially provide for the dampening of the rice, with successive drying and softening treatments, tend to increase the nutritional values of the food, by means of a partial molecular decomposition deriving from the natural fermentation.

Indeed, the latter is susceptible to causing the breakdown of the more complex organic compositions in other ones that are simpler and more easily digestible, as well as richer in vitamins.

It is also known that, currently, there are efforts being made to reproduce, on an industrial scale, the abovementioned procedures, following various methods, all based on the use of steam to obtain, in practical and economic terms, the desired treatment of rice, or another cereal, by providing, at times, if required by the case at hand, potential integrative wettings intended to dampen the products for better results of the same processes.

However, these known procedures, although they generally offer technically effective results and even, in some cases, of importance, do not usually take into account potential chemical and/or biological transformations that may occur in the product during treatment.

The abovementioned transformations, in practical terms, may occur either due to not being able to intervene instantaneously on processing times or due to the structural alterations of the product, caused by steam when its pressure is associated with the weight of the product itself.

Consequentially, with apparatus and procedures currently available, a more or less noticeable degradation can be observed in the products obtained, giving rise to a potential penalization in the marketing of the same.

In effect, the apparatus for the production of precooked rice (parboiled) currently in use, consist of enormous airtight containers, in which the product is stowed and subjected to pressurized steam treatments after being dampened in the soaking tanks.

From these containers, the treated rice exits thanks to gravity, thereby the pressure, at the outlets, takes on very high values, resulting from the sum of the steam pressure and the weight of the product.

Obviously, this circumstance gives rise to alterations in the chemical structure of the treated cereal, as well as notable deformations in the caryopsis, since the strong pressures end up influencing the external part of the kernel.

The same strong pressures may also make substances like furans and pentosans, which are present in the hull of the grain, volatile.

It is also worthwhile to note that the abovementioned traditional systems are not capable of preventing residues of previous processes from altering the finished product.

Indeed, the previously mentioned containers are not emptied completely after each production cycle, with serious consequences for the product treated during successive cycles.

### SUMMARY OF THE INVENTION

The aim of the present invention is to provide a method and an apparatus that overcome the drawbacks of the prior art cited above.

Within this aim, one object of the invention is to provide a method and an apparatus through which it is possible to subject the rice, or other cereals, to a perfectly homogeneous precooking treatment.

Another specific object of the present invention is to provide an apparatus for the production of precooked (parboiled) rice, that the operator can use to follow, minute by minute, the parboiling process.

Another object of the present invention is to provide an apparatus for the production of precooked rice that avoids the possibility of an excessive deformation of the grains and/or of their uneven coloring.

Yet another important object of the present invention is to provide a method and an apparatus that make it possible to notably reduce the consumption of water, with considerable savings and rationalizations in times, in the water, thermal, energy systems.

Another object of the present invention is to provide an apparatus that can be built with considerable savings in construction.

Another object of the present invention is to provide a simplification of the process and management with related optimal results.

Another object of the present invention is to provide a method and apparatus that make it possible to obtain a complete and gradual cooking, enabling the treatment also of products with release of starch, thereby considerably avoiding the phenomenon of agglomeration.

Another important object of the present invention is to provide a new rice-based food product.

This and other objects, that will become more apparent below, are achieved through a method and apparatus for the processing of cereals, as claimed in the appended claims.

### BRIEF DESCRIPTION OF THE DRAWINGS

Further characteristics and advantages of the present invention will become more apparent through the examination of the following detailed description of a preferred, though not exclusive, embodiment of the invention, illustrated by way of non-limiting example in the attached drawings, in which:

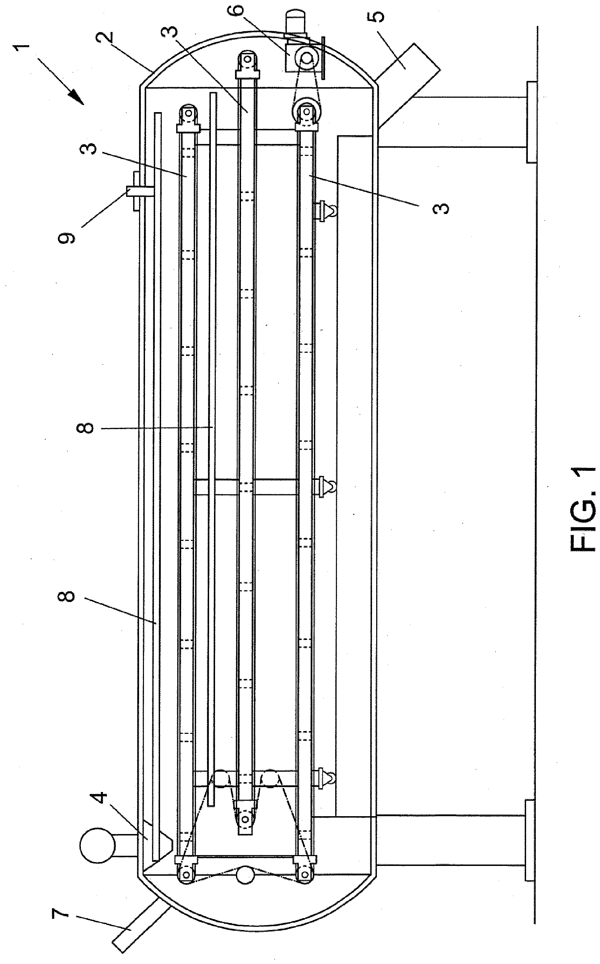

Figure 1 is a side elevation view, sectioned lengthwise, of the apparatus pertaining to this invention;

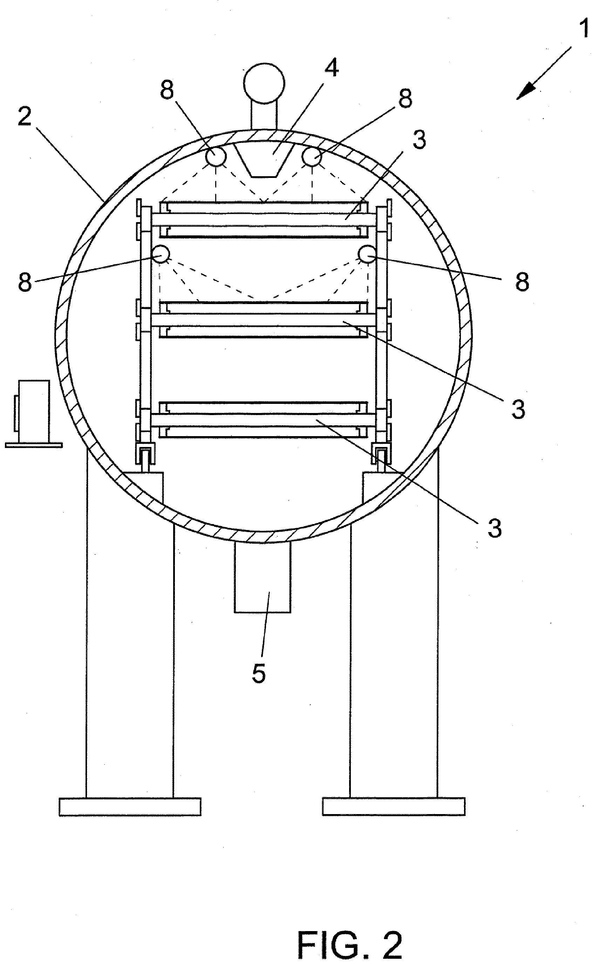

Figure 2 is a frontal section view of the apparatus;

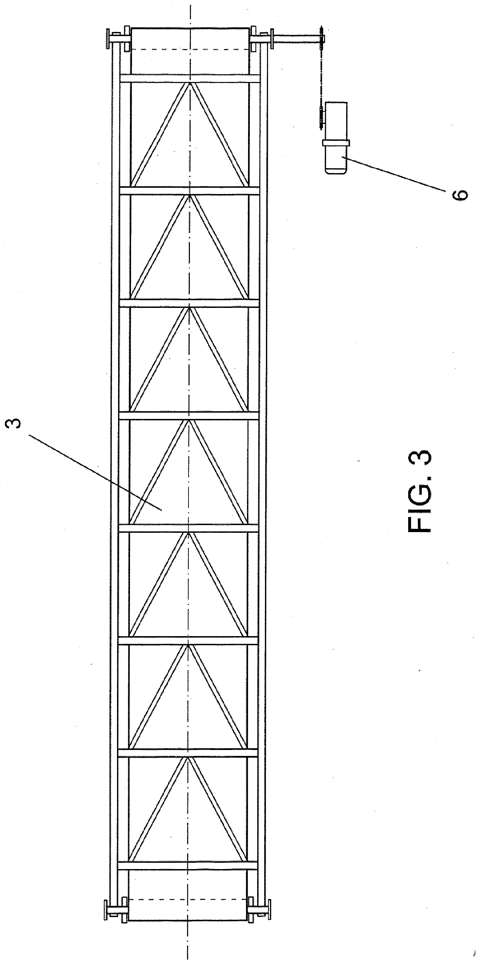

Figure 3 is a plan view partially illustrating the internal part of the apparatus.

### DESCRIPTION OF THE PREFERRED EMBODIMENTS

With particular reference to the numerical symbols of the abovementioned figures, the apparatus according to the invention, indicated as a whole with the reference number 1, includes an autoclave 2 inside of which are arranged, on horizontal planes lying one above another, conveyor belts 3, on which the rice, falling from the hopper 4, is forced to pass in succession, until it is unloaded through an outlet 5.

The conveyor belts 3 are activated by means of a motor 6 and a suitable kinetic mechanism so that each of them slides in an opposite direction relative to an adjacent one.

At one end of the autoclave there is a duct 7 for inserting water vapor under pressure.

At the opposite end, and above, safety valves are provided, which are not illustrated in the drawings.

In the upper part of the same autoclave, a pressure gauge and a thermometer are installed and, on the bottom, automatic valves are present, connected with an internal level indicator and capable of ensuring the bleeding of condensations.

On the bottom of the autoclave a coil is installed, fed with a hot fluid and intended to maintain a constant temperature at the bottom itself.

On the walls of the autoclave windows are formed protected by athermic glass.

According to the invention, inside the autoclave 2 there is a network of pipes 8 suitably fastened to the inside of the structure and equipped with nebulizer nozzles intended to distribute water and other suitable fluids onto the product that passes on the conveyor belts.

The network of pipes 8 is designed to nebulize the fluid in such a way as to cover the entire surface of the upper and lower conveyor belts.

The pipes 8 are fed by a regulating input valve 9 capable of bringing the fluid along the cooking course through which, by means of the nebulizer nozzles, the correct and required/desired amount of liquid to be spread onto the product being cooked is ensured according to the parameters set in advance to guarantee, in terms of substance and measure, the final result desired.

The apparatus also includes an electronic management and control system capable of ensuring at the same time, inside the autoclave, wetting, cooking, and whatever is necessary for a progressive adaptation and functionality of the new apparatus installed.

Essentially, the processing method according to the present invention includes the transport of the rice in static suspension, in relatively small amounts, with a little thickness, for an improved exposure to the treatment and the action of the steam only.

Moreover, unlike traditional parboiling processing systems, which all require a prior wetting phase of the product in "soaking tanks" before the introduction into the autoclave, according to the present invention the product is fed into the autoclave with no prior wetting phase, as it is wet directly in the autoclave, by introducing a specific amount of water, calculated in the different parameters according to the needs of the degree and method of cooking desired, by means of the network of pipes 8.

The wet product is then subjected to the action of the steam that is responsible for the perfect transformation of the product and the related biological stabilization of the nutritional and vitamin substances, however without all the other factors, cited previously, negatively affecting the same.

In this way any toxic influences of the substances present in raw rice (paddy), such as furfural (contained in the outer shell), can be avoided, and there is the absolute guarantee of a uniform treatment of the product itself.

In fact, the abovementioned apparatus receives, treats, and expels each individual grain in the same identical way, without creating deposits, sludges, or wastes which, as it has been possible to observe, remain exposed longer to the treatment, giving rise to grains of a darker color that compromise the appearance as well as the other characteristics of the overall product.

In other words, it can be held that the rice resting on the conveyor belts 3 of the autoclave fluctuates in the space saturated with steam, along the entire course set until it exits the autoclave itself.

Moreover, with the present apparatus, the operator can vary and correct, or determine, each element involved in the success of the treatment, acting on specific switches/timers, that regulate the action of the mechanisms installed in the autoclave, and then can verify, through the previously mentioned windows, adequately illuminated, the effects of the decisions taken and the maneuvers made.

Each individual element: humidity, temperature, pressure, time of exposure to steam and related temperature, and so forth, can thus be set in advance and then, if necessary, modified, without compromising, but rather optimizing and obtaining the best quality of the product, for which the operator, if necessary, may correspondingly intervene with elements made of copper.

It should also be noted that the method ensures the presence of fewer defects typical of parboiled rice and that, in any case, one can contemporaneously or separately intervene in this eventuality, either with accessory elements made of copper, as anti-fungal material, for example for the conveyor belt meshes or the container walls, or with solutions made of the same material, in order to prevent one or more serious defects in the treated rice, that is the formation of black grains, which seems to originate from spores existing in symbiosis with the grains.

Likewise, for the same purposes, infra-red rays can be used, which tend to further improve the product obtained.

More specifically, the relatively low quantity of the product exposed to the steam, unlike the current other production techniques, prevents the excessive deformation of the grains, which have become gelatinous due to the effect of the procedure, and grants the same a lower rate of humidity when exiting the autoclave.

This circumstance makes it possible, by using a successive pneumatic transport system, to eliminate completely any lumps of concentrated, consolidated product, thereby facilitating the drying operation, which is indispensable before continuing with other necessary processes on the treated rice.

The product obtained, while maintaining all the typical and fine characteristics of parboiled rice, presents the desired color, that is determined by the appropriate selection of the temperature, the pressure, and the wetting process, and in any case is generally lighter and brighter than the usual yellow of parboiled rice, with a reduction of the characteristic odor of the products currently available on the market, and is also shinier and more uniform, as well as more compact and with higher crystallization.

These latter characteristics, in addition to guaranteeing excellent resistance to over-cooking and to becoming mushy, indicate the perfect success of the treatment carried out and the complete chemical transformation, with consequent molecular decomposition, that makes the product not only more nutritious, but also more noticeably more digestible than traditional rice, without compromising the qualitative aspect, the perfume, color, and flavor.

The apparatus and the method according to the invention can also be used for the production of a new food product: bulgur rice.

As is known, bulgur consists of hulled and broken up pre-cooked durum wheat in different grain sizes.

Its earliest origins were in Eurasia and in the Mediterranean and then spread throughout the entire southern Mediterranean and North Africa with the expansion of the Islamic culture.

The versatility and practicality of this food has ensured its success among Armenian, Arab-Turkish, North African peoples and the southern zones of the Mediterranean peninsula, but ethnic/cultural customs have limited its diffusion.

For these reasons, bulgur did not evolve in the dietary habits of those who used to consume it.

Today, however, new technical opportunities and progress grant this food new and original solutions: rice for example.

The latter has never been used for this purpose because its pre-cooking or parboiling takes place while the cereal is still covered by the external hull (chaff), the specific terminology of which is paddy.

However, rice chaff possesses substances that, during the soaking and cooking phases, are transferred inside the grain, giving it the characteristic straw color, aroma, and the typical grassy flavor of the parboiled rice, making it unsuitable and incomparable with the specific/practical use of bulgur.

It should also be noted that the chaff, when subjected to strong cooking pressure, releases solvents of consistent effectiveness that migrate in the rice because of the process.

Under these conditions it was impossible to even think of creating with rice a food comparable to bulgur wheat.

Thanks to the method and the apparatus of the present invention it is now possible to produce bulgur rice.

Indeed, according to the present invention, the operations are carried out on rice with no chaff, so-called hulled or husked, which is then subjected to breaking up and drying.

Moreover, thanks to the progressive wetting/cooking, the final result of color, quality, and physical and organoleptic characteristics like aroma, flavor, consistency, etc. typical of bulgur are reached.

It has been found that the invention achieves the intended aim and objects.

The method and apparatus of the present invention guarantee a complete and gradual cooking, obtained with the progressive metering of fluid.

In this way it is possible to treat with cooking even products with a release of starch since the progressive metering of the liquid noticeably prevents the phenomenon of agglomeration.

The method and apparatus according to the present invention make it possible to noticeably reduce the consumption of water, by at least 75%, compared to the systems known so far that require soaking tanks.

The reduced consumption of water enables considerable savings and rationalizations in processing times and in the water, heating, and energy systems.

Further important advantages are due to the notable savings in terms of constructing the systems, the simplification of the process and management with related optimal results.

Naturally the materials used, as well as the dimensions, can be any according to requirements.

## Claims

1. A method for processing cereals, **characterized in that** it comprises:
feeding a cereal into an autoclave;
conveying the cereal on a series of conveyor belts;
wetting the cereal along an initial part of said series of conveyor belts;
heating said autoclave;
inserting water vapor into said autoclave to cook said cereal;
unloading the cereal from said autoclave.

2. An apparatus for processing cereals, **characterized in that** it comprises an autoclave (2) inside of which are arranged, on horizontal planes lying one above another, conveyor belts (3), on which a cereal fed into said autoclave is forced to pass in succession; said autoclave comprising means (7) for introducing water vapor under pressure and heating means; said apparatus also comprising, inside the autoclave (2), a network of pipes (8) equipped with nebulizer nozzles designed to distribute water or other fluid onto said cereal along at least an initial portion of said conveyor belts (3).

3. The apparatus according to claim 2, **characterized in that** said network of pipes (8) nebulizes the fluid in such a way as to cover the entire surface of the upper conveyor belt (3) and a lower one (3).

4. The apparatus according to claim 2, **characterized in that** said pipes (8) are fed by means of a regulating input valve (9).

5. The apparatus according to claim 2, **characterized in that** it comprises an electronic management and control system.

6. The apparatus according to claim 2, **characterized in that** said conveyor belts (3) are driven by means of a motor (6) and a suitable kinetic mechanism so that each of them slides in an opposite direction relative to an adjacent one.

7. The apparatus according to claim 2, **characterized in that** said heating means comprise, where necessary, a coil installed on the bottom of said autoclave; said coil being fed with a hot fluid and being designed to maintain a constant temperature at the bottom itself.

8. A rice-based food product obtained by a method for processing cereals according to claim 1 and/or by an apparatus for processing cereals according to one or more of claims 2 to 7, said product consisting of hulled or husked rice, that is without the chaff, wet and subjected to pre-cooking or parboiling and then broken up and dried to obtain bulgur.
